# EUROPEAN PATENT APPLICATION

(11) **EP 4 234 761 A1**
(43) Date of publication of application: **30.08.2023**
(21) Application number: 22158904.7
(22) Date of filing: 25.02.2022
(51) Int. Cl.: C25B 1/04, C25B 1/24, C25B 3/11, C25B 3/27, C25B 9/01, C25B 9/19, C25B 9/60, C25B 11/03, C25B 9/70

(54) **ELECTROLYSIS CELL**

(71) Applicant: thyssenkrupp nucera AG & Co. KGaA, 44141 Dortmund (DE)
(72) Inventor: Austenfeld, Sebastian, 59494 Soest (DE); Toros, Peter, 45326 Essen (DE); Funck, Frank, 58730 Fröndenberg/Ruhr (DE); Wagner, Michael, 42115 Wuppertal (DE)
(74) Representative: thyssenkrupp Intellectual Property GmbH

(57) **Abstract**

The invention relates to an electrolysis cell for chlor-alkali or alkaline water electrolysis comprising two cell elements (2, 3) each defining an electrode chamber (4, 5) by providing a back wall (6) and sidewalls (7) of the electrode chambers (4, 5), an electrode (8, 9) accommodated in each of the electrode chambers (4, 5), and a sheet-like separator (10) extending in a height direction (H) and a width direction of the electrolysis cell (1), the separator (10) being interposed in a joint (11) between the two cell elements (2, 3) and providing a separating wall (17) between the electrode chambers (4, 5), wherein at least one of the electrodes (8, 9) is made from a sheet of metallic mesh (16), which is supported by a plurality of webs (12) attached to the back wall (6) of the respective electrode chamber (4, 5), the webs (12) extending in the height direction (H) of the electrolysis cell (1), and wherein a plurality of ribs (13) extending in the width direction of the electrolysis cell (1) is carried by the webs (12), wherein the electrode (8, 9) is disposed on the plurality of ribs (13).

## Description

### Background of the invention

The invention relates to an electrolysis cell for chlor-alkali or alkaline water electrolysis according to the preamble of claim 1.

Electrolysis cells for chlor-alkali and alkaline water electrolysis comprise two electrode chambers that are separated by a sheet-like separator, typically a membrane or a diaphragm. The performance of such electrolysis cells is closely linked to two parameters. First, the distance between the electrodes that has to be traversed by the ions carrying electric charge through the separator, and second, the surface structure and properties of the electrodes at which the electrochemical reactions take place.

Optimizing the distance between the electrodes has led to so-called zero-gap electrolysis cells, in which the electrodes are in direct contact with the separator at a certain contact pressure. The contact pressure is maintained by elastic components in the cell that transfer a certain mechanical pressure to the other components of the cell, in particular the electrodes. Further, an additional mechanical load is exerted on the electrodes by the internal cell operating pressure, especially a pressure difference between the anode and the cathode chamber.

In order to have homogeneous reaction conditions across the complete electrode area, it is important to ensure a homogeneous pressure distribution over the surface area of the electrodes. Conventionally this is achieved by sufficiently stiff electrodes that distribute mechanical pressure introduced by vertical supporting webs attached to the back wall of the respective electrode chamber homogeneously across the whole electrode area by their high flexural modulus. Electrode structures of this kind are for example known from US 2020/0283919 A1 and US 2011/0259735 A1.

However, the known solution has the drawback that the efficiency gain achievable by the electrode structure design cannot be fully realized. Most efficient electrodes with regard to energy efficiency and material usage have a fine mesh structure that gives rise to a large reaction surface area in close proximity to the separator. The finer the mesh structures are, the weaker is the material of the electrode with regard to mechanical stiffness, such that there is a trade-off between homogeneous reaction conditions across the electrode area and highly efficient electrode structures.

### Brief Summary of Invention

The object of the invention is to provide an electrolysis cell for chlor-alkali or alkaline water electrolysis comprising an electrode made from a metallic mesh that improves the homogeneity of the reaction conditions across the electrode area.

This object is achieved by an electrolysis cell with the features of claim 1.

Hereby, an electrolysis cell for chlor-alkali or alkaline water electrolysis is provided that comprises two cell elements each defining an electrode chamber by providing a back wall and sidewalls of the electrode chambers. The electrolysis cell further comprises an electrode accommodated in each of the electrode chambers, and a sheet-like separator extending in a height direction and a width direction of the electrolysis cell. The separator is interposed in a joint between the two cell elements and provides a separating wall between the electrode chambers. At least one of the electrodes is made from a sheet of metallic mesh, which is supported by a plurality of webs attached to the back wall of the respective electrode chamber, wherein the webs extend in the height direction of the electrolysis cell. According to the invention, the electrolysis cell further comprises a plurality of ribs that extend in the width direction of the electrolysis cell, wherein the plurality of ribs is carried by the webs and the electrode is disposed on the plurality of ribs.

The ribs carried by the webs form a plurality of cross braces between the webs that provide an additional support of the electrode between the webs in the width direction of the cell. Due to the horizontal support of the ribs, the mechanical stiffness of the electrode mesh can be reduced without reducing the distance between the webs. Reducing the distance between neighboring webs would have an adverse effect on the flow characteristics of the electrolyte/gas mixtures through the cell. Preferably, in the electrolysis cell according to the invention neighboring webs are spaced at an interval of at least 100 mm. The electrode may preferably be fixed to the ribs and/or webs e.g. by spot welding.

In preferred embodiments, the ribs are inserted in recesses of the webs. This ensures low manufacturing effort of the electrode supporting structure. Even more preferred, the ribs are accommodated in the recesses of the webs in such a way that the webs and the ribs form a flush supporting grid for the electrode. The electrode is then carried by a grid of transverse and longitudinal braces that improves the homogeneity of the pressure distribution throughout the electrode.

Preferably, the ribs have a rib height and a rib thickness defining an elongated cross-section of the rib with the rib height being larger than the rib thickness. The rib is preferably arranged within the cell such that the electrode is disposed on a narrow side of the rib defined by the rib thickness. The elongated cross-section of the ribs provides an advantageous geometrical moment of inertia for loads acting perpendicular to the electrode's surface. Besides mechanical reasons the orientation of the ribs is chosen in order to ensure a good liquid supply to the separator via the electrode with a sufficient opening ratio. Particularly preferably, the rib height is at least twice as large as the rib thickness.

Preferably, the rib height is at most one third of the depth of the electrode chamber in which the ribs are disposed. Thereby, a large free cross-section for the vertical electrolyte flow in the electrode chamber is maintained.

In preferred embodiments, the ribs have a rectangular cross-section. A simple rectangular cross-section has the advantage that the ribs can be made from sheet metal without the need for any metal forming steps. In case that the material amount should further be reduced, ribs having an S-shaped, I-shaped, T-shaped or L-shaped cross-section can be used alternatively, which provide a high geometrical moment of inertia at low material use.

In preferred embodiments, the rib height is at least three times the thickness of the sheet of metallic mesh to provide a high level of support to the electrode.

Preferably, the ribs are arranged at an angle to the electrode in the range of 70° to 90°, particularly preferred in the range 75° to 85°. In particular, it is preferred, that the ribs are arranged perpendicular or tilted downwards towards the electrode. The perpendicular arrangement has the advantage of forming the most stable support for the electrode. Tilted downwards ribs have the positive effect that gas bubbles forming at the electrode will not accumulate below the horizontal ribs, but will be guided away from the electrode into the vertical electrolyte flow behind the ribs.

In certain embodiments, the webs are regularly spaced at a first interval, the ribs are regularly spaced at a second interval, and the ratio of the first interval and the second interval is in the range of 1.5 to 3.5.

In certain embodiments, the supported electrode has a first flexural modulus in the width direction and a second flexural modulus in the height direction of the electrolysis cell, and the ratio of the first flexural modulus to the second flexural modulus is in the range of 1.5 to 3.5.

Preferably, the sheet of metallic mesh is a punched metal sheet or an expanded metal sheet. Alternatively, also a woven wire mesh may be used for the electrode.

Preferably, the ribs are attached to the webs by spot welding or by a clipped connection. Such connections allow an easy assembly that can also be automatized.

The ribs are preferably made from a metal, in particular from nickel or titanium.

Further advantages of the invention are described in the following with regard to the embodiments shown in the attached drawings.

### Brief Description of Drawings

- Fig. 1: shows schematically two electrolysis cells according to the invention in a vertical section view,
- Fig. 2: shows schematically in a front view the support grid for the electrode formed by the webs and ribs in the electrode chambers of the electrolysis cells according to Fig. 1,
- Fig. 3A, 3B: shows schematically the assembly of webs and ribs with differently shaped cross-sections,
- Fig. 4: shows schematically a detailed view of an electrode supported by a rib.

### Detailed Description of Invention

In the drawings same parts are consistently identified by the same reference signs and are therefore generally described and referred to only once.

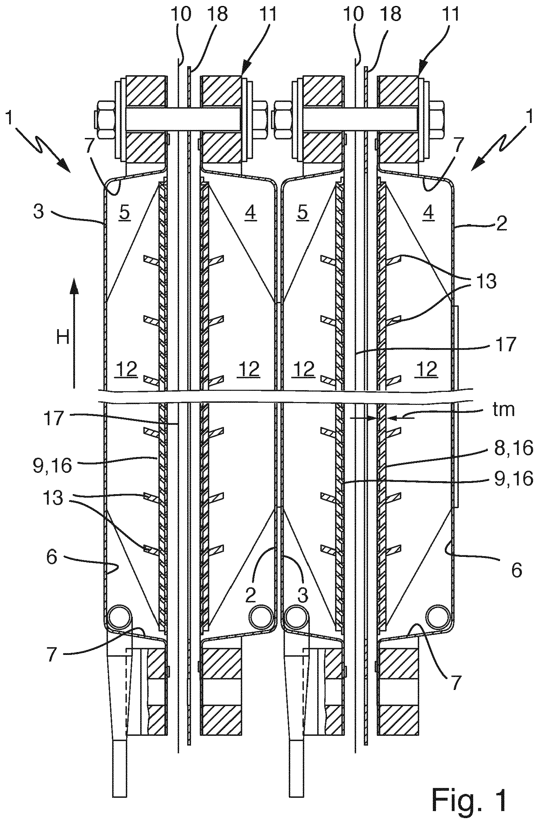

In **Fig. 1****,** two electrolysis cells 1 are shown in a side-by-side arrangement. The electrolysis cells 1 are suited for chlor-alkali or alkaline water electrolysis.

Each electrolysis cell 1 has two cell elements 2, 3 and each of the cell elements 2, 3 defines an electrode chamber 4, 5 by providing a back wall 6 and sidewalls 7 of the electrode chambers 4, 5. In each of the electrode chambers 4, 5 an electrode 8, 9 is accommodated. The electrode chambers 4, 5 have a depth in a direction perpendicular to the electrodes 8, 9 that may be either equal or unequal. In particular, the electrode chamber 4, 5, in which a larger amount of foaming is expected, as e.g. the anode chamber in chlor-alkali electrolysis, may be chosen to have a larger depth.

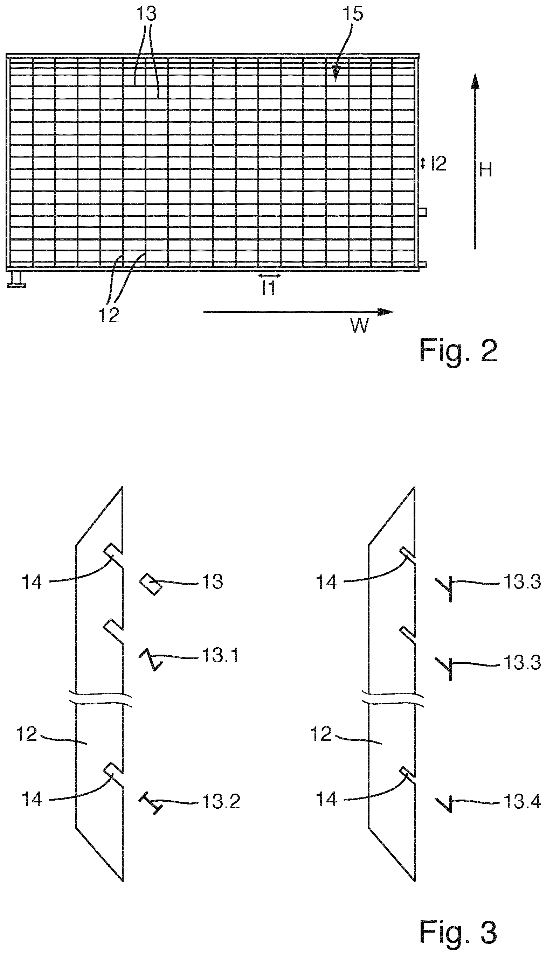

A sheet-like separator 10 is interposed in a joint 11 between the two cell elements 2, 3 and provides a separating wall 17 between the electrode chambers 4, 5. The sheet-like separator 10 extends in a height direction H and a width direction W (see Fig. 2) of the electrolysis cell 1. The sheet-like separator 10 is preferably an ion-exchange membrane, or a porous diaphragm. Further, a sealing 18 is provided in the joint 11 for sealing the electrode chambers 4, 5. The joint 11 may be a screwed connection of two metal frames clamping the cell elements 2, 3 that form half-shells of the cell 1 to an individually sealed unit, i.e. an electrolysis cell 1 of the single element type.

At least one of the electrodes 8, 9 is made from a sheet of metallic mesh 16. Preferably, the sheet of metallic mesh 16 is a punched metal sheet or an expanded metal sheet. However, a wire mesh, e.g. a woven wire mesh, may be used as electrode 8, 9, as well.

The metallic mesh of the electrode 8, 9 is supported by a plurality of webs 12 attached to the back wall 6 of the respective electrode chamber 4, 5. The webs 12 extend in the height direction H of the electrolysis cell 1. A plurality of ribs 13 extending in the width direction W of the electrolysis cell 1 is carried by the webs 12 and the electrode 8, 9 is disposed on the plurality of ribs 13.

As depicted in Fig. 1 and Fig. 2, the ribs 13 are preferably inserted in recesses 14 of the webs 12, wherein the ribs 13 are accommodated in the recesses 14 of the webs 12 in such a way that the webs 12 and the ribs 13 form a flush supporting grid 15 for the electrode 8, 9. Preferably, the ribs 13 are attached to the webs 12 by spot welding or by a clipped connection for easy assembly.

The ribs 13 are preferably made from a metal in order to achieve a sufficiently high bending resistance. In particular, nickel or titanium are preferred. Titanium is particularly preferred in chlorine producing electrode chambers or low PH liquids, while nickel is chosen particularly for high PH applications. Generally, also the use of stainless steel for the ribs 13 is imaginable depending on the use case.

As shown in **Fig. 2****,** the webs 12 are preferably regularly spaced at a first interval 11, the ribs 13 are regularly spaced at a second interval 12, and the ratio of the first interval I1 and the second interval I2 is preferably in the range of 1.5 to 3.5. Having a smaller interval I2 between the ribs 13 than the interval I1 between the webs 12 ensures a good support of the electrode 8, 9, while leaving enough space between the webs 12 for unobstructed vertical flow of electrolyte through the electrode chamber 4, 5. The interval I1 is preferably in the range of 70 mm to 200 mm, more preferably in the range of 100 mm to 150 mm. The interval I2 is preferably chosen in the range of 20 mm and 135 mm, more preferably between 30 mm and 100 mm and most preferred between 40 mm and 80 mm.

Metallic meshes that are used for the electrodes 8, 9 often have a varying flexural modulus depending on the direction of bending. For example, expanded metal sheets have a lower bending resistance (lower flexural modulus) in the expansion direction and a higher bending resistance (higher flexural modulus) in the direction orthogonal to the expansion direction. For punched metal meshes and wire meshes the directional flexural moduli depend on the hole pattern and the structure of the mesh, respectively.

For a homogenous support of electrodes 8, 9 made from such a metallic mesh material the intervals of support in the direction of higher bending resistance can be larger, while the intervals of support in the direction of lower bending resistance should be smaller. If the supported electrode 8, 9 has a direction dependent flexural modulus it is therefore preferred to arrange the electrode 8, 9 in the electrode chamber 4, 5 such that a first flexural modulus in the width direction W and a second flexural modulus in the height direction H of the electrolysis cell 1 have a ratio of the first flexural modulus to the second flexural modulus in the range between 1.5 to 3.5. This results a homogeneous support of the electrode while allowing for comparatively large intervals between the webs 12 for an unobstructed electrolyte flow.

In **Fig. 3A and 3B,** the assembly of ribs 13 and webs 12 is schematically shown. The webs 12 have recesses 14 that are adapted to the cross-section of the ribs 13. For a rectangular, S-shaped 13.1 or I-shaped 13.2 cross-section, substantially rectangular recesses 14 are preferred, as shown in Fig. 3A. For T-shaped 13.3 or L-shaped 13.4 cross-sections, slot-like recesses are sufficient depending on the direction of mounting. For easy assembly the ribs 13 are placed into the dedicated recesses 14 in the webs 12. Fixing is either done by spot welding or by force fit, e.g. in a clipped connection. The ribs 13 are accommodated in the recesses 14 such that they are in direct contact to the electrode 8, 9 when the electrode 8, 9 is placed atop the supporting grid 15 of webs 12 and ribs 13.

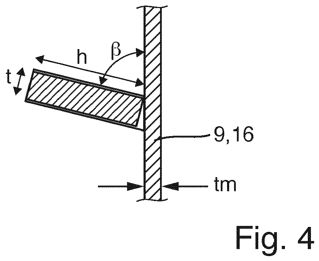

**Fig. 4** is a detailed view of a rib 13 supporting the electrode 9. The rib 13 has a rib height h and a rib thickness t that define an elongated cross-section of the rib 13 with the rib height h being larger than the rib thickness t. Preferably the rib height h is at least twice as large as the rib thickness t. In the simplest case, the ribs 13 have a rectangular cross-section, as shown in Fig. 4.

For providing best support of the electrode 9, the rib height h is preferably at least three times the thickness tm of the sheet of metallic mesh 16 of the electrode 9. The rib height h is further preferably at most one third of the depth of the electrode chamber in which the rib 13 is disposed.

The rib height h may preferably be chosen in the range from 4 mm to 12 mm. The rib thickness t is preferably in the range of 1 mm to 2 mm. Generally, rib thickness and rib height are chosen preferably as low as possible to provide the desired stability without obstructing the electrolyte flow to an undesired extent and to keep material costs down. Due to the lower elastic modulus of titanium, to be used typically in chlor-alkali electrolysis cells, the rib height and thickness will be larger for those ribs than for ribs made of nickel, typically used in alkaline water electrolysis cells.

The ribs 13 are preferably arranged either perpendicular or tilted downwards towards the electrode 8, 9. The perpendicular arrangement results in the rib height being oriented parallel to the main direction of mechanical pressure on the electrode 8, 9 and thus provides superior support. In a tilted arrangement, the angle β between the ribs 13 and the electrode 8, 9 should not be too small. Preferably, the ribs 13 are arranged at an angle β to the electrode 8, 9 in the range of 70° to 90°. For optimizing the guidance of gas bubbles, an angle β in the range 75° to 85° is preferred. This prevents stagnation of gases that are generated during electrolysis.

All embodiments shown in the drawings relate to an electrolysis cell of the single element type, in which every cell is an individually replaceable, sealed unit. However, it is evident to the person skilled in the art that the invention is applicable to other types of electrolysis cells, in particular to those of the filter-press type, in the same way.

### List of Reference Signs

- 1: Electrolysis cell
- 2, 3: Cell element
- 4, 5: Electrode chamber
- 6: Back wall
- 7: Sidewall
- 8, 9: Electrode
- 10: Separator
- 11: Joint
- 12: Web
- 13: Rib
- 13.1: S-shaped cross-section
- 13.2: I-shaped cross-section
- 13.3: T-shaped cross-section
- 13.4: L-shaped cross-section
- 14: Recess
- 15: Supporting grid
- 16: Sheet of metallic mesh
- 17: Separating wall
- 18: Sealing

- H: Height direction of cell
- W: Width direction of cell
- h: rib height
- t: rib thickness
- tm: thickness of metallic mesh
- I1: First interval
- I2: Second interval
- β: Angle

## Claims

1. Electrolysis cell for chlor-alkali or alkaline water electrolysis comprising
two cell elements (2, 3) each defining an electrode chamber (4, 5) by providing a back wall (6) and sidewalls (7) of the electrode chambers (4, 5),
an electrode (8, 9) accommodated in each of the electrode chambers (4, 5), and
a sheet-like separator (10) extending in a height direction (H) and a width direction (W) of the electrolysis cell (1), the separator (10) being interposed in a joint (11) between the two cell elements (2, 3) and providing a separating wall (17) between the electrode chambers (4, 5),
wherein at least one of the electrodes (8, 9) is made from a sheet of metallic mesh (16), which is supported by a plurality of webs (12) attached to the back wall (6) of the respective electrode chamber (4, 5), the webs (12) extending in the height direction (H) of the electrolysis cell (1),
**characterized in that**
a plurality of ribs (13) extending in the width direction (W) of the electrolysis cell (1) is carried by the webs (12), wherein the electrode (8, 9) is disposed on the plurality of ribs (13).

2. Electrolysis cell according to claim 1, **characterized in that** the ribs (13) are inserted in recesses (14) of the webs (12).

3. Electrolysis cell according to claim 2, **characterized in that** the ribs (13) are accommodated in the recesses (14) of the webs (12) in such a way that the webs (12) and the ribs (13) form a flush supporting grid (15) for the electrode (8, 9).

4. Electrolysis cell according to any one of the claims 1 to 3, **characterized in that** the ribs (13) have with a rib height (h) and a rib thickness (t) defining an elongated cross-section of the rib (13) with the rib height (h) being larger than the rib thickness (t).

5. Electrolysis cell according to claim 4, **characterized in that** the rib height (h) is at least twice as large as the rib thickness (t).

6. Electrolysis cell according to any one of the claims 4 or 5, **characterized in that** the ribs (13) have a rectangular cross-section.

7. Electrolysis cell according to any one of the claims 4 or 5, **characterized in that** the ribs (13) have an S-shaped (13.1), I-shaped (13.2), T-shaped (13.3), or L-shaped (13.4) cross-section.

8. Electrolysis cell according to any one of the claims 4 or 7, **characterized in that** the rib height (h) is at least three times the thickness (tm) of the sheet of metallic mesh (16).

9. Electrolysis cell according to any one of the claims 1 to 8, **characterized in that** the ribs (13) are arranged at an angle (β) to the electrode (8, 9) in the range of 70° to 90°.

10. Electrolysis cell according to any one of the claims 1 to 9, **characterized in that** the ribs (13) are arranged perpendicular or tilted downwards towards the electrode (8, 9).

11. Electrolysis cell according to any one of the claims 1 to 10, **characterized in that** the webs (12) are regularly spaced at a first interval (11), the ribs (13) are regularly spaced at a second interval (12), and the ratio of the first interval (11) and the second interval (12) is in the range of 1.5 to 3.5.

12. Electrolysis cell according to any one of the claims 1 to 11, **characterized in that** the supported electrode (8, 9) has a first flexural modulus in the width direction (W) and a second flexural modulus in the height direction (H) of the electrolysis cell (1), and the ratio of the first flexural modulus to the second flexural modulus is in the range between 1.5 to 3.5.

13. Electrolysis cell according to one of the claims 1 to 12, **characterized in that** the sheet of metallic mesh (16) is a punched metal sheet or an expanded metal sheet.

14. Electrolysis cell according to one of the claims 1 to 13, **characterized in that** the ribs (13) are attached to the webs (12) by spot welding or by a clipped connection.

15. Electrolysis cell according to one of the claims 1 to 14, **characterized in that** the ribs (13) are made from a metal, in particular from nickel or titanium.
